# EUROPÄISCHE PATENTSCHRIFT

(11) **EP 2 187 504 B1**
(45) Veröffentlichungstag und Bekanntmachung des Hinweises auf die Patenterteilung: **03.10.2018**
(21) Anmeldenummer: 08169336.8
(22) Anmeldetag: 18.11.2008
(51) Int. Cl.: H02K 3/487

(54) **Anordnung zum Verschließen von Nuten**
Slot closing device
Agencement destiné à la fermeture d'encoches

(43) Veröffentlichungstag der Anmeldung: 19.05.2010
(73) Patentinhaber: ABB Schweiz AG, 5400 Baden (CH)
(72) Erfinder: Gasparini, Rico, CH-5408 Ennetbaden (CH); Piur, Armin, CH-8957 Spreitenbach (CH)
(74) Vertreter: Zimmermann & Partner Patentanwälte mbB

(56) Entgegenhaltungen:
- EP-A- 0 379 012
- EP-A- 0 639 882
- CH-A- 489 131
- DE-A1- 1 463 872
- JP-A- 60 091 835

## Beschreibung

### TECHNISCHES GEBIET

Die vorliegende Erfindung betrifft ein Verfahren zur Fixierung von Leitern oder Wicklungsstäben in Nuten von elektrischen Maschinen oder von Generatoren sowie eine dazu geeignete Vorrichtung beziehungsweise Anordnung.

### TECHNOLOGISCHER HINTERGRUND UND STAND DER TECHNIK

Auf die in den Nuten elektrischer Maschinen angeordneten Leiterstäbe und Spulen, nachstehend vereinfachend Wicklungen genannt, wirken unter der Wechselwirkung des die Wicklungen durchfliessenden elektrischen Stromes und des magnetischen Feldes im Luftspalt Kräfte wechselnder Richtung ein. Darüber hinaus soll die Wicklung selbst bei Vibrationen und Setzerscheinungen der Wicklung zuverlässig in der Nut gehalten werden. Es ist daher notwendig, diese Wicklungen im Wesentlichen spielfrei in den Nuten zu halten. Derzeit sind verschiedene Nutverschlussanordnungen bekannt. In der DE-A-2165727 wird beispielsweise vorgeschlagen, eine streifenförmige Wellfeder zwischen dem Nutenstein und einem die Wicklung schützenden, streifenförmigen Druckstück anzuordnen. Zum Einführen wird die Wellfeder gemäss der DE-A-2165727 im Wesentlichen flachgepresst, wobei nicht genannt ist, mit welchen Mitteln dies bewerkstelligt werden soll.

Einen ähnlichen Ansatz verfolgt die EP-A-0601827, welche vorschlägt, eine streifenförmige Wellfeder zwischen dem Nutenstein und einem die Wicklung schützenden, streifenförmigen Druckstück anzuordnen. Dabei stammt die zur Befestigung notwendige Kraft von der Vorspannung der Wellfeder. Zum Einführen der Nutverschlussanordnung in die Nut ist die Wellfeder in vorgespanntem Zustand mit einem thermischen (härtenden, schmelzenden, aktivierbaren) Klebstoff am Druckstück befestigt. Nach dem Einführen wird die Klebverbindung durch Erwärmung zerstört, wodurch die Federwirkung wieder hergestellt werden soll.

Die CH-A-662911 schlägt prinzipiell einen ähnlichen Aufbau wie die in der DE-A-2165727 offenbarten Nutverschlussanordnung vor. In einer ersten Ausführungsform erfolgt die Vorspannung der Wellfeder mittels einer Verklebung der Wellfeder mit dem Druckstück und dem Nutenstein. In einer alternativen Ausführungsform wird die Vorspannung der Wellfeder über eine thermoaktivierbare Schraubverbindung erzeugt, welche nach dem Positionieren der Nutverschlussanordnung einer Wärmebehandlung ausgesetzt wird, wodurch die Vorspannwirkung der Schraubverbindung aufgehoben werden soll.

In der CH-A-525 581 wird vorgeschlagen, den Nutenstein und das Druckstück in Längsrichtung der Nut jeweils konisch auszuführen, so dass eine Doppelschrägkeilanordnung entsteht. Der Nutenstein und das Druckstück werden bei der Montage und/oder einem Nachspannen in der Längsrichtung der Nut gegeneinander gepresst.

Eine weitere Möglichkeit offenbart die EP-A-0639882, welche vorschlägt, den Nutenstein in Richtung der Nuttiefe derart lamellenartig auszugestalten, dass er als Federelement wirkt. Ähnlich wie bei der CH-A-525 581 sind Nutenstein und Drückstück in der Längsrichtung der Nut wiederum als Doppelschrägkeilanordnung ausgeführt.

Einen weiteren Lösungsansatz offenbart die am 18. Mai 2007 eingereichte internationale Patentanmeldung WO 2008/141467 mit dem Titel "Verfahren zum Fixieren von Wicklungsstäben in Nuten elektrischer Maschinen oder von Generatoren" der vorliegenden Anmelderin. Die Nutverschlussanordnung weist ein Federelement auf, welches zwischen einem Druckstück und einem Nutenstein angeordnet ist. Beim Einführen der Nutverschlussanordnung in eine Nut sind zwei in Nutquerrichtung gebogene Blattfedern des Federelementes mit einem thermoaktivierbaren Klebstoff zusammengeklebt. Nach dem Positionieren der Nutverschlussanordnung in der Nut wird die Klebverbindung einer Wärmequelle oder Schockwellen oder elektromagnetischen Wellen oder einer chemischen Reaktion derart ausgesetzt, dass die Klebverbindung zumindest aufgebrochen und die Federkraft des Federelementes wieder hergestellt wird.

Die Druckschrift CH 489 131 A1 beschreibt einen Wicklungsstab in einer Nut einer elektrischen Maschine mit einer Nutverschlussanordnung, beinhaltend ein zwischen einem Nutenstein und einem Druckstück angeordnetes blattfederartiges Federelement, welches mit mindestens einem, mit dem Nutenstein und dem Druckstück zusammenwirkenden Befestigungsmittel in einen aktivierbaren, vorgespannten Zustand versetzt ist, wobei um eine Vorspannung des in einem unverspannten Zustand im Wesentlichen flächigen Federelements herbeizuführen, eine Biegungsverteilung herbeigeführt wird, wobei das Befestigungsmittel nach einer Positionierung der Nutverschlussanordnung in der Nut zur Aktivierung der Federkräfte des mindestens einen Federelementes von einer ersten Position mechanisch in eine kontrollierbare zweite Position überführbar ist, und wobei das Befestigungsmittel bei Erreichung der zweiten Position aus der Nutverschlussanordnung entfernbar ist und eine Vorspannung des Federelements gelöst wird, was als Aktivierung zu verstehen ist, ohne dass das Federelement gänzlich entspannt wird.

Vielen dieser Nutverschlussanordnungen ist gemeinsam, dass die zur Verfügung stehenden Federwege verhältnismässig klein sind. Weitere Nachteile liegen in der aufwändigen Herstellung und Einführung der Nutverschlussanordnung in die Nut sowie allenfalls unerwünschte Klebstoffrückstände. Überdies hat die Praxis im Fall von thermoaktivierbaren Klebstoffverbindungen gezeigt, dass selbst ähnliche thermoaktivierbare Klebstoffverbindungen oft erst bei unterschiedlichen Temperaturen und Einwirkzeiten aufbrechen. Auf Grund der Nichteinsehbarkeit der Nutverschlussanordnung im verbauten Zustand besteht daher in der Folge oft eine Ungewissheit darüber, ob und wie viel die Klebstoffverbindung tatsächlich aufgebrochen ist. Analoge Nachteile ergeben sich aus der Verwendung von thermoaktiven beziehungsweise thermoaktivierbaren Schrauben, welche ihre Festigkeit nach einer Erwärmung verlieren. Nebst der latenten Unsicherheit betreffend die Qualität der Verspannung ergibt sich in diesem Fall noch das Problem von abgebrochenen Schraubenresten, welche unkontrollierbar in der elektrischen Maschine verbleiben.

### ZUSAMMENFASSUNG DER ERFINDUNG

Es ist daher ein Ziel der vorliegenden Erfindung, zumindest einige der Nachteile von bekannten Nutverschlussanordnungen zu vermeiden.

Dieses Ziel wird durch einen Leiter oder Wicklungsstab in einer Nut einer elektrischen Maschine mit einer Nutverschlussanordnung gemäss Anspruch 1 gelöst.

Der erfindungsgemässe Leiter oder Wicklungsstab in einer Nut einer elektrischen Maschine mit Nutverschlussanordnung umfasst die Merkmale des Anspruchs 1.

Eine derartige Nutverschlussanordnung bietet den Vorteil, dass sie als einbaufertiges Set vorkonfektionierbar beziehungsweise vormontierbar ist, welches in Richtung einer Längsachse direkt in eine Nut einführbar ist. Die Längsachse verläuft in eingebautem Zustand in Richtung der Nut. Typischerweise handelt es sich bei der Nut um eine Statornut einer elektrischen Maschine. In der Folge ermöglicht der setartige Aufbau der erfindungsgemässen Nutverschlussanordnung im Vergleich zu konventionellen Nutverschlussanordnungen eine Verbesserung der Wirtschaftlichkeit bei der Erstmontage. Das Befestigungsmittel ist nach erfolgter Positionierung der Nutverschlussanordnung in der Nut von einer ersten Position mechanisch in eine kontrollierbare zweite Position überführbar/verbringbar, wodurch die nutzbaren Federkräfte des mindestens einen Federelementes aktiviert werden. Dieser Vorgang erfordert keine zusätzliche Energiezufuhr, etwa in Form von Wärme, sondern erfolgt idealerweise bei Raumtemperatur. Unter Aktivierung wird ein Lösen der Vorspannung des Federelementes verstanden, allerdings ohne, dass das Federelement danach gänzlich entspannt wird. Ohne anderslautende Definition umfasst der in der nachfolgenden Beschreibung sowie den Patentansprüchen verwendete Begriff "das Befestigungsmittel" im Sinn der vorliegenden Erfindung sowohl ein einzelnes Federelement, als auch ein mehrteiliges Federelement, etwa in Form von zwei oder mehr Federelementen, welche zu einer Federpackung zusammengefügt sind. Die kontrollierbare zweite Position ermöglicht nicht zuletzt die gewünschte Sicherheit, dass die verbaute Nutverschlussanordnung den ihr zugeordneten Wicklungsabschnitt bestimmungsgemäss in der vordefinierten Art und Weise in der Nut festhält. Durch die Verbesserung der Nutverschlussqualität ist eine Verbesserung der Zuverlässigkeit und Fehleranfälligkeit im Vergleich zu bekannten Nutverschlussanordnungen erzielbar. Die zweite Position ist durch eine Vielzahl von Ausführungsvarianten kontrollierbar.

Die Überführung des Befestigungsmittels von der ersten in die zweite Position variiert je nach dem gewählten Befestigungsmittel. Dies wird in der nachfolgenden Beschreibung noch detaillierter geschildert. Wenn das Befestigungsmittel bei Erreichung der zweiten Position aus der Nutverschlussanordnung entfernt wird, ermöglicht dies eine optische Kontrolle der Nutverschlussqualität auf besonders einfache und wirtschaftliche Weise. Vorteile dieser Ausführungsform ergeben sich in der ohne weitere Hilfsmittel erfordernden, raschen und zuverlässigen Ausführbarkeit der optischen Kontrolle. Entfernbare Befestigungsmittel ermöglichen eine wirtschaftliche Wiederverwendung derselben für weitere Nutverschlussanordnungen. Bei einer weiteren Ausführungsform der Nutverschlussanordnung verbleibt das Befestigungsmittel, beispielsweise in Form einer Schraube, in der zweiten Position an der Nutverschlussanordnung. Eine optisch einsehbare Markierung an der Schraube und allenfalls am Nutenstein erleichtert die klare Identifikation der gewollten zweiten Position, beispielsweise durch eine vordefinierbare Markierungsstellung, etwa in Form von gegeneinander gerichteten Pfeilspitzen. Eine kontrollierbare Erreichung der zweiten Position ist alternative oder ergänzend durch Erkennungshilfen, etwa in Form einer Rasterung zwischen Schraubenelement und Nutensteinoberfläche, erreichbar.

Bei einer Entfernung der Befestigungsmittel aus der elektrischen Maschine nach erfolgter Montage der Nutverschlussanordnung ist die Gefahr von unkontrolliert in der elektrischen Maschine verbleibenden Befestigungsmitteln oder deren Fragmenten im Vergleich zu bekannten Nutverschlussanordnungen weiter verringert.

Sowohl um das Risiko von Fehlern bei der Erstmontage zum Vornherein zu vermindern als auch um während des Unterhalts herabzusetzen, etwa durch ein unbeabsichtigt herausgefallenes Befestigungsmittel, ist das Befestigungsmittel bevorzugt aus einem nichtmetallischen Werkstoff, beispielsweise Kunststoff, hergestellt.

Eine in Richtung der Längsachse der Nutverschlussanordnung gesehen endseitige Anordnung des Befestigungsmittel ermöglicht eine Ausgestaltung des Federelementes ohne irgendwelche Durchbrüche in dessen kritischen Bereichen, insbesondere im hochbelasteten, etwa quermittigen Bereich bei der Hochachse. Ist die Länge der erfindungsgemässen Nutverschlussanordnung entlang der Längsachse verhältnismässig kurz, so ist die erforderliche Vorspannkraft beispielsweise durch ein einziges Befestigungsmittel aufbringbar. Falls ein einziges Befestigungsmittel zur Vorspannung des beziehungsweise der Federelemente ausreichen sollte, ist es je nach Ausführungsform auch möglich, die Befestigungsmittel in Richtung der Längsachse gesehen etwa längsmittig anzuordnen.

Misst die Länge der erfindungsgemässen Nutverschlussanordnung hingegen mehr, dann bietet sich beispielsweise eine Ausführungsform mit einem bei jeder Stirnseite angeordneten, sozusagen zweiteiligen Befestigungsmittel an. Wenn eine Lagepositionierung des Federelementes relativ zum Druckstück beziehungsweise dem Nutenstein vor der Montage der Nutverschlussanordnung in der Nut erforderlich sein sollte, so ist dies mit geeigneten Führungsmitteln realisierbar. Idealerweise sind diese Führungsmittel im Druckstück, dem Nutenstein und/oder dem Federelement integriert, so dass keine zusätzlichen Bauteile erforderlich sind. Bei einer Ausführungsform der Nutverschlussanordnung weist das Federelement beispielsweise stirnseitig, d.h. in Richtung der Längsachse gesehen, je eine Einbuchtung auf. Die Innenseite dieser Einbuchtung ist dabei durch ihre Form an einer Aussenseite eines endseitig an der Nutverschlussanordnung angeordneten Befestigungsmittels derart angepasst, dass das Federelement durch seine Form daran geführt ist.

Sollte die Länge der Nutverschlussanordnung noch grösser sein und dadurch noch grössere Vorspannkräfte erfordern, die nicht mehr von zwei Befestigungsmitteln aufgenommen werden können, so sind zwischen diesen zusätzliche Befestigungsmittel vorzusehen, beispielsweise ein dazwischen angeordnetes drittes Befestigungsmittel. In letzterem Fall dürfte je nach Ausführungsform allerdings mindestens ein Durchbruch im Federelement erforderlich sein, falls das Federelement in Richtung der Hochachse gesehen einen rechteckförmigen Querschnitt aufweist.

Je nach Ausführungsform umfasst die erfindungsgemässe Nutverschlussanordnung mindestens ein Befestigungsmittel in Form einer Schraube, welche beispielsweise während der Vormontage der Nutverschlussanordnung zu einem Set in ein Innengewinde des Druckstückes eingeschraubt wird. Bei dieser Ausführungsform dient der Schraubenkopf oder eine vorgängig aufgeschraubte Mutter als Gegenhalter zum Aufbringen der erforderlichen Vorspannkraft des Federelementes in Richtung der Hochachse. Falls das Befestigungsmittel anstelle einer Schraube durch einen Bajonettverschluss mit in das entsprechend geformte Druckstück eingreifenden Nocken ausgeführt ist, ist eine besonders rasche Vormontage der Nutverschlussanordnung sowie ein besonders rasches Entfernen des Befestigungsmittels aus der Nutverschlussanordnung erreichbar.

In einer weiteren Ausführungsform der erfindungsgemässen Nutverschlussanordnung erfolgt eine Verbindung zwischen Nutenstein und Druckstück anstelle über eine Schraube über eine Art Blasebalg, welcher durch seine laterale Ausdehnung eine kraftschlüssige Verbindung schafft, wodurch eine Vorspannung des Federelementes ebenfalls erreichbar ist. Anstelle des Blasebalgs ist ein spreizdornartiges Befestigungsmittel einsetzbar, mit welchem das Druckstück und der Nutenstein ebenfalls lateral gehalten werden können, um die gewünschte Vorspannung des Federelementes zu erzielen. Eine weitere Ausführungsform eines Befestigungsmittels weist in Richtung der Querachse gesehen einen C-förmigen Querschnitt auf, wobei je ein Schenkel dem Druckstück, beziehungsweise dem Nutenstein zugeordnet sind und/oder in diese eingreifen.

Zudem sind alternative Befestigungsmittel einsetzbar, welche beispielsweise teilweise abreissbar oder abbrechbar gestaltet sind. Als Vertreter solcher Befestigungskonzepte sind beispielsweise Befestigungsmittel genannt, von denen nach der Positionierung der Nutverschlussanordnung in der Nut nach dem Aufheben der Vorspannung ein Teil an der Nutverschlussanordnung verbleibt. So weist etwa die Ausführungsform mit einem clipartigen Befestigungsmittel mit in Richtung der Querachse gesehen C-förmigem Querschnitt eine Sollbruchstelle auf, welche ein definiertes Abbrechen/Abreissen eines nutensteinseitigen Abschnitts des beispielsweise kunststoffenen Befestigungsmittels ermöglicht. Eine ähnliche Aktivierung der Federkräfte ist beispielsweise auch mit einem nietartig ausgeführten Befestigungsmittel realisierbar, dessen nutensteinseitiger Schliesskopf abtrennbar ist.

Um Schäden infolge von in die bei der Montage der Nutverschlussanordnung in die elektrische Maschine hineingefallener Befestigungsmittel oder Teilen davon zu begrenzen, sind die Befestigungsmittel idealerweise aus elektrisch isolierenden Werkstoffen hergestellt.

Falls der Federweg des Federelementes der erfindungsgemässen Nutverschlussanordnung nicht ausreichend sein sollte und/oder um Kunden- beziehungsweise weitere Montageanforderungen, beispielsweise während der Wartung, erfüllen zu können, sind das Druckstück, der Nutenstein und das Federelement alternativ oder zusätzlich zu den vorangehend aufgezeigten Ausführungsformen derart beschaffen, dass sie in Richtung der Längsachse mindestens eine Keil-Gegenkeil-Kombination bilden. Eine derartige Keil-Gegenkeil-Kombination ist beispielsweise durch folgende Konstellationen erzeugbar:
a) Druckstück und Nutenstein
b) Druckstück und Federelement
c) Nutenstein und Federelement
d) Druckstuck und Federelement und Nutenstein

Am Rand sei erwähnt, dass je nach Anforderungen Varianten mit Zwischenstücken einheitlicher Dicke oder ebenfalls mit einem keilförmigen Querschnitt möglich sind, ohne den eigentlichen, hier vorliegenden Erfindungsgedanken zu verlassen.

Um eine definierte Federspannung und Federkraft zu erzielen, ist der Nutenstein derart biegesteif ausgeführt, dass er sich beim Vorspannen und insbesondere in verbautem Zustand in der Nut nicht oder höchstens unwesentlich verformt.

In einer einfachen Ausführungsform der erfindungsgemässen Nutverschlussanordnung weist das Federelement beispielsweise eine konstante Federdicke auf, während der Nutenstein und das Druckstück jeweils formmässig komplementäre Keilflächen aufweisen. Um eine Vorspannung des in unverspanntem Zustand im Wesentlichen ebenen, flächigen Federelementes herbeizuführen, wird eine Biegungsverteilung in Richtung der Hochachse entlang der Querachse über die Breite des Federelementes herbeigeführt. Typischerweise erfolgt dies nach dem klassischen Biegebalken-Prinzip, wobei die Auflagepunkte und der Krafteinleitungspunkt vorzugsweise flächig ausgestaltet sind, um lokale Beschädigungen des Federelementes zu vermeiden und wobei der Biegebalken in Richtung der Querachse erzeugt wird. Idealerweise befinden sich die linienartigen Auflagepunkte in Richtung der Längsachse auf einer konvex gewölbten Keilfläche, während sich der linienartige Druckpunkt in etwa zwischen den linienartigen Auflagepunkten auf einer konkav gewölbten Keilfläche befindet. Die Wölbungen begünstigen eine Zentrierwirkung des Druckstückes. Für die Funktion ist es nicht entscheidend, ob die konkave Keilfläche dem Druckstück oder dem Nutenstein zugeordnet ist. Mit Keilflächen, welche einen Neigungswinkel von wenigen Graden, typischerweise von etwa einem Grad aufweisen, sind gute Verspannqualitäten erzielbar.

Je nach Ausführungsform der Nutverschlussanordnung weist das Federelement in Längsrichtung einen linear ansteigenden Querschnitt auf. Auf Grund dieser Ausführung des Federelementes als Keil resultieren über die Federlänge unterschiedliche Federkennwerte, welche jedoch bei kleinen Neigungswinkeln im Bereich von wenigen Grad hinsichtlich der Funktion vernachlässigbar sind.

Falls mehrere Federelemente zu einer Federpackung gestapelt werden, kann die Keil-Gegenkeil-Kombination beispielsweise auch durch zwei Federelemente gebildet werden, während der Nutenstein und das Druckstück in Längsrichtung keine keilförmigen Querschnitte aufweisen.

Versuche haben gezeigt, dass das mindestens eine Federelement einer Nutverschlussanordnung gute Federeigenschaften aufwies, wenn es eine Vielzahl von elektrisch isolierenden, unidirektional in Richtung der Querachse ausgerichteten Fasern umfasst, welche durch ein warmfestes Harz miteinander verbunden sind. Dadurch entsteht ein Federelement, mit welchem sich entlang der Querachse in Richtung der Hochachse wirkende Federkräfte gewünschter Stärke aktivieren lassen. Die Querachse und die Hochachse verlaufen in einer gedachten Ebene, welche einen Querschnitt der Nut und der Nutverschlussanordnung wiedergibt. Ein maximaler Federweg stellt sich demnach etwa quermittig über eine Linie in Richtung der Hochachse ein.

Das streifenförmige Federelement ist je nach Anforderungen hinsichtlich des angestrebten Federweges, der Federkräfte sowie der Einbausituation einfach konfigurierbar. Durch die Erzeugbarkeit grösserer Federwege des Federelementes sind Setzerscheinungen im Wicklungsaufbau besser ausgleichbar. In der Folge sind die Abstände der Wartungsintervalle vergrösserbar und die Verfügbarkeit der elektrischen Maschine insgesamt verbesserbar. Die zuverlässigere Befestigung der Wicklungen infolge des ermüdungsarmen Federelementes trägt wesentlich zur Dauerfestigkeit des Nutverschlusses in der Nut bei und leistet dadurch einen wesentlichen Beitrag zur Betriebssicherheit und zur Verminderung von potentiellen Schadenfällen.

Für die Funktion einer erfindungsgemässen Nutverschlussanordnung sollten die Fasern elektrisch isolierend sein. Als Vertreter einer Vielzahl von dazu geeigneten Materialien seien an dieser Stelle beispielsweise Glasfasern und/oder para-amide Fasern wie etwa Kevlar genannt.

Das mindestens eine Federelement ist je nach Ausführungsform blattfederartig gestaltet. Je nach Bedarf sind mehrere Federelemente zu einer Federpackung stapelbar. In seiner einfachsten Ausführungsform ist das Federelement quaderförmig und im Wesentlichen eben, wobei die Federdicke in Richtung der Hochachse wesentlich geringer als seine Breite in Richtung der Querachse ist. Die Tatsache, dass das Federelement in unbelastetem, d.h. unvorgespannten Zustand im Wesentlichen flach ist, ermöglicht einen Einsatz für verschiedene Nutbreiten, ohne dass aufwändige Modifikationen des Druckstückes und/oder des Nutensteins erforderlich sind. Überdies begünstigt eine derartige Form eine wirtschaftliche Herstellung, indem mehrere streifenartige Federelemente aus einer Halbzeugplatte heraustrennbar sind. Wenn der Faserverbund aus den Fasern in Richtung der Hochachse abrasionsfreie oder -arme Deckschichten eingesetzt werden, erleichtert dies ein Nachverkeilen zusätzlich.

Anstelle der oben geschriebenen Nutverschlussanordnungen sind auch Nutverschlussanordnungen einsetzbar, bei denen das Druckstück und das mindestens eine Federelement vereinigt sind. Diese Einteiligkeit führt besonders bei der Vormontage zu weiteren Vorteilen.

Der Vollständigkeit halber wird auf eine Verwendung des mindestens einen Federelementes gemäss der vorangegangenen Beschreibung in einer Nutverschlussanordnung gemäss der vorangegangenen Beschreibung hingewiesen. Hinsichtlich der sich daraus ergebenden Vorteile wird auf die entsprechenden Textstellen der Beschreibung der Nutverschlussanordnung beziehungsweise des Federelementes verwiesen. Betreffend die Vorteile, welche sich aus dem Einsatz der erfindungsgemässen Nutverschlussanordnung ergeben, sei an dieser Stelle auf die nachfolgende Beschreibung des Nutverschlussverfahrens hingewiesen.

Hinsichtlich des Nutverschlussverfahren zur Fixierung einer Wicklung in einer Nut eines Stators einer elektrischen Maschine wird die Aufgabe dadurch gelöst, dass wie folgt vorgegangen wird:
- die Wicklung wird in die Nut eingeführt, bis sie in Richtung der Hochachse gesehen auf dem Nutgrund aufliegt,
- eine Nutverschlussanordnung wird bereitgestellt, welches mindestens ein zwischen einem Nutenstein und einem Druckstück angeordnetes Federelement umfasst, welches durch mindestens ein mit dem Nutenstein und dem Druckstück zusammenwirkenden Befestigungsmittel in einen aktivierbaren Zustand versetzt ist, insbesondere vorgespannt ist,

- dann wird diese Nutverschlussanordnung typischerweise von einer Stirnseite her in Richtung ihrer Längsachse in die Nut eingeführt,
- dann erfolgt eine Positionierung der Nutverschlussanordnung in Richtung der Längsachse relativ zur Nut,
- anschliessend werden die bestimmungsgemässen Federkräfte des mindestens einen Federelementes mechanisch aktiviert.

Bei einem Generator von beispielsweise etwa sechs Metern Länge ergeben sich bei einem Bedarf von derzeit zirka zweitausend Nutverschlussanordnungen bereits bei der Erstmontage auf Grund des vereinfachten Einführens der Nutverschlussanordnungen durch die setartige, ausserhalb der eigentlichen Nut vormontierbare Bauweise der Nutverschlussanordnung beträchtliche Zeiteinsparungen und damit wirtschaftliche Vorteile. Durch die mechanische Aufhebung der Vorspannung wird der definitive Spannzustand der Nutverschlussanordnung in der Nut sofort erreicht. Ein weiterer Vorteil liegt darin, dass der Spannzustand der Nutverschlussanordnung in der Nut sofort und idealerweise ohne Zuhilfenahme von Hilfsmitteln optisch einsehbar ist, was wesentlich zur Qualitätssicherung beiträgt.

Je nach Anforderungen an die verbaute Nutverschlussanordnung wird das Befestigungsmittel der Nutverschlussanordnung nach Aktivierung der bestimmungsgemässen Federkräfte entfernt. Dabei wird das Befestigungsmittel ganz oder teilweise aus der Nutverschlussanordnung entfernt. Besonders bei einer vollständigen Entfernung des Befestigungsmittels ist auf diese Weise die Gefahr von Schäden an der elektrischen Maschine auf Grund von unerwünschterweise unkontrolliert in der elektrischen Maschine verbleibenden Befestigungsmitteln oder deren Fragmenten bedeutend verringert. Anstelle der Entfernung sind Ausführungsformen realisierbar, bei denen die Erreichung der zweiten Position des Befestigungsmittels angezeigt wird. Dabei erfolgt die Anzeige vorzugsweise optisch und erfordert keine weiteren Hilfsmittel.

### KURZE BESCHREIBUNG DER ZEICHNUNG

In der Zeichnung sind Ausführungsbeispiel der Erfindung rein schematisch dargestellt. Dabei zeigt:
- Fig. 1: eine räumliche Darstellung einer ersten Ausführungsform einer Nutverschlussanordnung;
- Fig. 2: einen Schnitt durch die Nutverschlussanordnung von Figur 1 entlang einer durch II-II symbolisierten Ebene;
- Fig. 3: eine räumliche Darstellung einer zweiten Ausführungsform einer Nutverschlussanordnung mit zwei unterschiedlich ausgeführten Befestigungsmitteln;
- Fig. 4: eine Draufsicht in Richtung einer Hochachse auf ein in Figur 3 vorgespannt dargestellten Federelementes in unbelastetem Zustand; und
- Fig. 5: einen Schnitt durch die Nutverschlussanordnung von Figur 3 entlang einer durch V-V symbolisierten Ebene.

### WEGE ZUR AUSFÜHRUNG DER ERFINDUNG

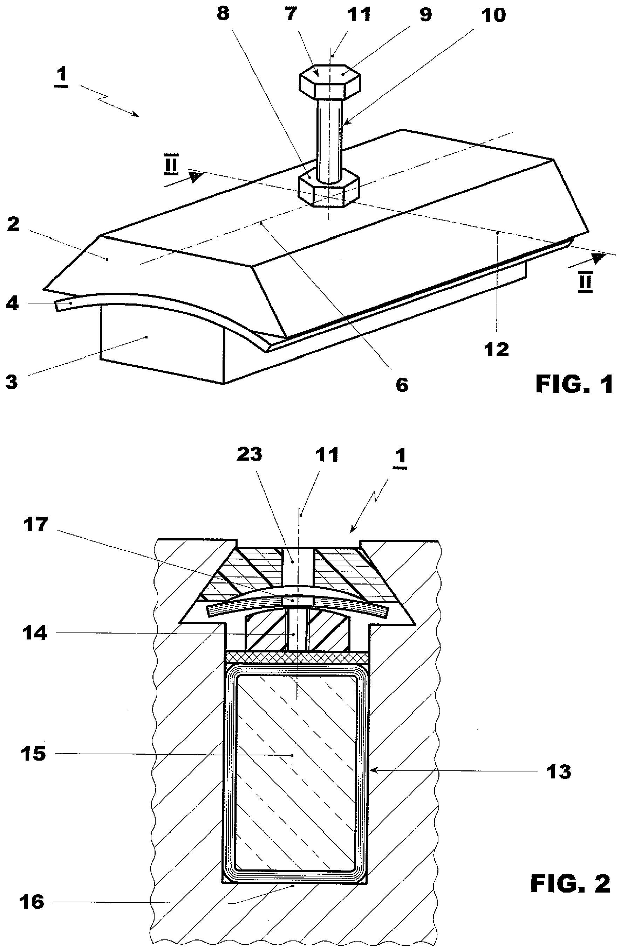

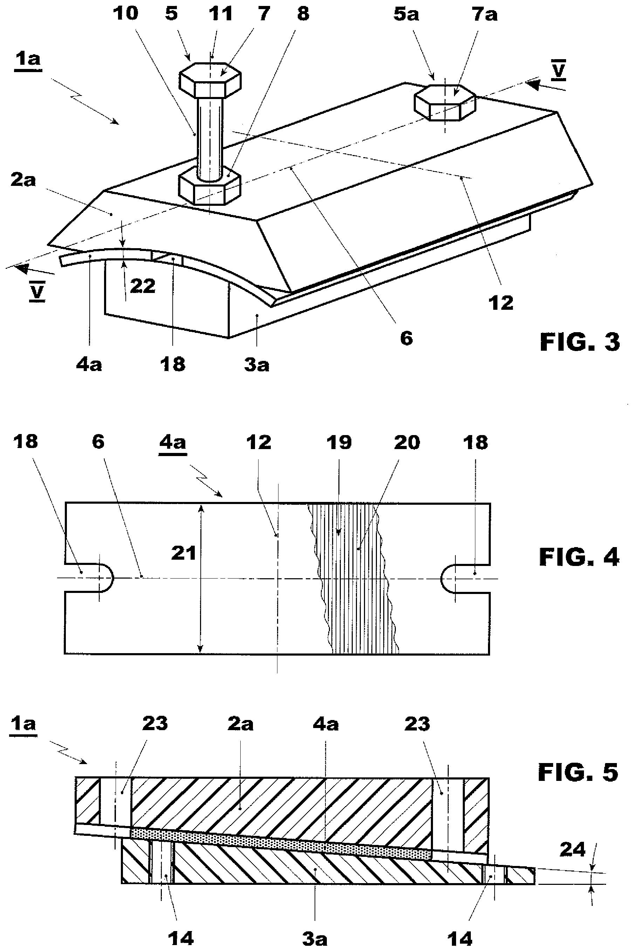

Die in Figur 1 dargestellte erste Ausführungsform einer erfindungsgemässen Nutverschlussanordnung 1 zeigt ein zwischen einem Nutenstein 2 und einem Druckstück 3 angeordnetes blattfederartiges Federelement 4 in vorgespanntem Zustand. Diese drei Elemente 2, 3, 4 werden in dieser Darstellung von einem Befestigungselement 5 in einer vordefinierten ersten Position gehalten und definieren eine Längsachse 6. Das Befestigungsmittel 5 umfasst eine Schraube 7 und eine Mutter 8, welche in Richtung eines Schraubenkopfes 9 auf einem Gewindeabschnitt 10 der Schraube 7 aufgeschraubt ist. Aufgrund der Anforderungen sind der Nutenstein 2 und das Druckstück 3 aus einem Schichtpressstoff mit Glasfasermatten, mineralischen Füllstoffen und Epoxydharz als Bindemittel gefertigt. Aus Sicherheitsgründen sind sowohl die Schraube 7 als auch die Mutter 8 ebenfalls aus diesem Material gefertigt. Andere Materialien sind selbstverständlich denkbar, solange sie die an sie gestellten Anforderungen erfüllen. Betreffend den Aufbau und die Materialien des Federelementes wird auf die Beschreibung zu Figur 4 verwiesen.

Zusammen mit der Figur 2 und in Analogie zur in Figur 5 gezeigten, weiteren Ausführungsform der Nutverschlussanordnung geht aus der Figur 1 hervor, dass das Druckstück 3 und der Nutenstein 2 als Keil-Gegenkeil-Kombination mit einem Neigungswinkel 24 von etwa einem Grad ausgebildet sind, wobei das Druckstück 3 an dessen Oberseite in Richtung einer Hochachse zusätzlich konvex gewölbt ist, um einen linienförmigen Kontakt mit dem konkav gewölbten Nutenstein 2 an dessen Unterseite zu ermöglichen.

Die in der Figur 2 dargestellte Schnittansicht entlang einer durch II-II in Figur 1 symbolisierten Schnittebene, welche durch eine Hochachse 11 und eine Querachse 12 definiert wird, zeigt die Nutverschlussanordnung 1 in einem zweiten Zustand. Der zweite Zustand ist erreicht, wenn die als Set oder Vormontageeinheit konzipierte Nutverschlussanordnung 1 beispielsweise in eine Statornut 13 eines Generators eingeschoben und in Richtung der Längsachse 6 beziehungsweise der Nut positioniert ist, nachdem das Befestigungsmittel von der ersten Position in eine kontrollierbare zweite Position überführt worden ist. Bei dieser Ausführungsform wurde das Befestigungsmittel 5 nach beziehungsweise zum Erreichen der zweiten Position aus der Nutverschlussanordnung 1 herausgeschraubt. Beim Verlassen eines entsprechenden Innengewindeabschnitts 14 im Druckstück 3 durch den Gewindeabschnitt 10 der Schraube 7 sind vordefinierte Federkräfte des mindestens einen Federelementes 4 aktiviert worden. Dadurch dass die Schraube 5 fehlt, ist eine zuverlässige Kontrolle der erfolgten Aktivierung des Federelementes 4 von blossem Auge durchführbar.

Die genannten Federkräfte gewährleisten ein zuverlässiges Festhalten einer isolierten Wicklung 15 in der Nut 13, indem die Wicklung 15 gegen einen Nutgrund 16 gepresst wird. Die Federkräfte sind entsprechend den Einbau- und Betriebsanforderungen der Nutverschlussanordnung ausgelegt. Aus der Figur 2 geht weiter hervor, dass das Federelement 4 einen Durchbruch 17 im Bereich der Hochachse 11 aufweist, durch welchen das Befestigungsmittel zum Vorspannen des Federelementes 4 hindurchgeführt worden war. Die Geometrie dieses Durchbruchs 17 muss derart gewählt werden, dass Risse und/oder Schwächungen des Federelementes 4 möglichst verhindert oder zumindest minimal gehalten werden. In der Figur 3 ist eine zweite Ausführungsform 1a der erfindungsgemässen Nutverschlussanordnung mit vorgespanntem Federelement 4a dargestellt. Da der konzeptionelle Aufbau ähnlich wie bei der in Figur 1 dargestellten ersten Ausführungsform ist, wurden identische Elemente mit denselben Bezugszeichen und gleich/ähnlich wirkende Elemente mit entsprechend ergänzten Bezugszeichen, beispielsweise "a" versehen.

Aufgrund der analogen Wirkungsweise der Elemente der Nutverschlussanordnung gemäss der zweiten Ausführungsform zur ersten Ausführungsform wird nachfolgend lediglich auf die Unterschiede zwischen den zwei Ausführungsformen 1, 1a eingegangen.

So ist etwa die rechts von der bekannten Schrauben/Mutter-Kombination Ausführungsform des Befestigungsmittels 5 lediglich durch eine Schraube 7a gebildet, deren Gewindeabschnitt in der ersten Position in den entsprechenden Innengewindeabschnitt im Druckstück eingreift.

Das in der Figur 4 dargestellte Federelement 4a entspricht dem in Figur 3 eingesetzten Federelement bei einer Draufsicht in Richtung der Hochachse 11. Der Einfachheit halber ist das Federelement 4a in unbelastetem Zustand dargestellt.

In Zusammenschau mit Figur 3 geht aus der Figur 4 hervor, dass das Federelement 4a an beiden Stirnseiten in Richtung der Längsache 6 je eine Einbuchtung 18 aufweist, um eine Durchführung der Befestigungselemente zu ermöglichen. Die Innenseite dieser Einbuchtung 18 ist dabei durch ihre Form an einer Aussenseite eines endseitig an der Nutverschlussanordnung angeordneten Befestigungsmittels derart angepasst, dass das Federelement 4a durch seine Form lateral an den Schrauben 7, 7a beziehungsweise deren Gewindeabschnitten geführt ist, um eine Positionierung des Federelements 4a während der Vormontage zu erleichtern. Versuche haben bestätigt, dass mit einem folgendermassen ausgebildeten Federelement 4a sehr gute Federeigenschaften erreichbar sind:
Wie insbesondere aus dem aufgebrochen dargestellten Bereich 19 hervorgeht, weist das elektrisch isolierende Federelement 4a eine Vielzahl von elektrisch isolierenden, unidirektional in Richtung der Querachse 12 ausgerichteten Fasern 20 auf, welche durch ein warmfestes Harz miteinander dauerhaft verbunden sind. Dadurch entsteht ein Federelement, mit welchem sich entlang der Querachse 12 in Richtung der Hochachse 11 wirkende Federkräfte vordefinierbarer Stärke aktivieren lassen.

Die elektrisch isolierenden Fasern sind in dieser Ausführungsform des Federelementes aus einer Vielzahl von Glasfasern 20 gebildet, wobei der Glasfaseranteil des Federelementes bevorzugt etwa zwei Drittel und der Harzanteil bevorzugt etwa 1/3 Gewichtsprozente betragen.

Die Querachse 12 und die Hochachse 11 verlaufen in einer gedachten Ebene, welche einen Querschnitt der Nut 13 und der Nutverschlussanordnung 1, 1a wiedergibt. Ein maximaler Federweg stellt sich demnach idealerweise etwa quermittig in Richtung der Hochachse 11 ein.

Bei einer Nutbreite von zirka 35 mm wurde bei einer Federbreite 21 von etwa 33 mm in Richtung der Querachse 12 und einer Federdicke 22 von etwa 1.3 mm in Richtung der Hochachse 11 ein ausgezeichneter Federweg von etwa 2.5 mm erreicht.

Die Figur 5 zeigt die Nutverschlussanordnung 1a von Figur 3 entlang einer durch V-V symbolisierten Ebene in einem nachverkeilten Zustand, wie er etwa nach einer Nachverkeilung anlässlich eines Unterhalts entsteht. Die durch die Wölbung der Keilflächen bedingten Kanten sind aus Gründen der Übersichtlichkeit nicht dargestellt. In dieser Ansicht sind die gegeneinander verschobenen Innengewindeabschnitte 14 und Durchgangslöcher 23 sichtbar, welche zum Zeitpunkt der Vormontage zur Durchführung des Befestigungsmittels gedient haben.

### BEZUGSZEICHENLISTE

- 1, 1a: Nutverschlussanordnung
- 2, 2a: Nutenstein
- 3, 3a: Druckstück
- 4, 4a: Federelement
- 5, 5a: Befestigungsmittel
- 6: Längsachse
- 7, 7a: Schraube
- 8: Mutter
- 9: Schraubenkopf
- 10: Gewindeabschnitt
- 11: Hochachse
- 12: Querachse
- 13: Nut
- 14: Innengewindeabschnitt
- 15: Wicklung
- 16: Nutgrund
- 17: Durchbruch / Durchdringung
- 18: Einbuchtung
- 19: aufgebrochen dargestellter Bereich
- 20: Fasern
- 21: Federbreite
- 22: Federdicke
- 23: Durchgangsloch
- 24: Neigungswinkel

## Patentansprüche

1. Leiter oder Wicklungsstab in einer Nut einer elektrischen Maschine mit einer Nutverschlussanordnung (1, 1a), beinhaltend ein zwischen einem Nutenstein (2, 2a) und einem Druckstück (3, 3a) angeordnetes blattfederartiges Federelement (4, 4a), welches mit mindestens einem, mit dem Nutenstein (2, 2a) und dem Druckstück (3, 3a) zusammenwirkenden Befestigungsmittel (5, 5a) in einen aktivierbaren, vorgespannten Zustand versetzt ist, wobei um eine Vorspannung des in einem unverspannten Zustand im Wesentlichen ebenen, flächigen Federelements (4, 4a) herbeizuführen, eine Biegungsverteilung in Richtung der Hochachse (11) entlang der Querachse (12) über die Breite des Federelements nach dem Biegebalken-Prinzip herbeigeführt wird, wobei der Biegebalken in Richtung der Querachse erzeugt wird, wobei das mindestens eine Federelement (4, 4a) eine Vielzahl von elektrisch isolierenden, in Richtung der Querachse (12) unidirektional ausgerichteten Fasern (20) umfasst, welche durch ein warmfestes Harz miteinander verbunden sind, wobei das Befestigungsmittel (5, 5a) nach einer Positionierung der Nutverschlussanordnung (1, 1a) in der Nut zur Aktivierung der Federkräfte des mindestens einen Federelementes (4, 4a) von einer ersten Position mechanisch in eine kontrollierbare zweite Position überführbar ist, und wobei das Befestigungsmittel (5, 5a) bei Erreichung der zweiten Position aus der Nutverschlussanordnung (1, 1a) entfernbar ist und eine Vorspannung des Federelements (4, 4a) gelöst wird, was als Aktivierung zu verstehen ist, ohne dass das Federelement gänzlich entspannt wird.

2. Leiter oder Wicklungsstab in einer Nut einer elektrischen Maschine mit einer Nutverschlussanordnung gemäss Anspruch 1, **dadurch gekennzeichnet, dass** eine Erreichung der zweiten Position des Befestigungsmittels, vorzugsweise optisch, erkennbar ist.

3. Leiter oder Wicklungsstab in einer Nut einer elektrischen Maschine mit einer Nutverschlussanordnung gemäss Anspruch 1 oder 2, **dadurch gekennzeichnet, dass** das Befestigungsmittel (5, 5a) in Richtung einer Längsachse (6) gesehen stirnseitig an der Nutverschlussanordnung angeordnet ist.

4. Leiter oder Wicklungsstab in einer Nut einer elektrischen Maschine mit einer Nutverschlussanordnung gemäss Anspruch 1 oder 2, **dadurch gekennzeichnet, dass** das Befestigungsmittel (5) in Richtung einer Längsachse (6) gesehen etwa längsmittig an der Nutverschlussanordnung angeordnet ist.

5. Leiter oder Wicklungsstab in einer Nut einer elektrischen Maschine mit einer Nutverschlussanordnung gemäss einem der Ansprüche 1 bis 4, **dadurch gekennzeichnet, dass** das Befestigungsmittel (5, 5a) mindestens eine Schraube (7, 7a) umfasst, welche in das Druckstück (3, 3a) einschraubbar ist, mit welcher Schraube (7, 7a) der Nutenstein (2, 2a) in Richtung einer Hochachse (11) verschiebbar ist.

6. Leiter oder Wicklungsstab in einer Nut einer elektrischen Maschine mit einer Nutverschlussanordnung gemäss einem der Ansprüche 1 bis 4, **dadurch gekennzeichnet, dass** das Befestigungsmittel mindestens ein klammerartiges, nietartiges, spreizdornartiges oder bajonettverschlussartiges Halteelement umfasst.

7. Leiter oder Wicklungsstab in einer Nut einer elektrischen Maschine mit einer Nutverschlussanordnung gemäss einem der Ansprüche 1 bis 6, **dadurch gekennzeichnet, dass** das Druckstück (3, 3a), der Nutenstein (2, 2a) und das Federelement (4, 4a) derart beschaffen sind, dass in Richtung einer beziehungsweise der Längsachse (6) mindestens eine Keil-Gegenkeil-Kombination gebildet ist.

8. Leiter oder Wicklungsstab in einer Nut einer elektrischen Maschine mit einer Nutverschlussanordnung gemäss einem der Ansprüche 1 bis 7, **dadurch gekennzeichnet, dass** das Druckstück und das mindestens eine Federelement vereinigt sind.

## Claims

1. Conductor or winding bar in a slot of an electrical machine comprising a slot closure arrangement (1, 1a), containing a leaf spring-like spring element (4, 4a) which is arranged between a sliding block (2, 2a) and a pressure piece (3, 3a) and is moved to an activatable, prestressed state by at least one attachment means (5, 5a) which interacts with the sliding block (2, 2a) and the pressure piece (3, 3a), wherein, in order to prestress the flat spring element (4, 4a), which is substantially planar in an unstressed state, a bending distribution is created in accordance with the bending beam principle over the width of the spring element along the transverse axis (12) in the direction of the vertical axis (11), wherein the bending beam is produced in the direction of the transverse axis, wherein the at least one spring element (4, 4a) comprises a large number of electrically insulating fibres (20), which are aligned unidirectionally in the direction of the transverse axis (12) and which are connected to one another by a heat-resistant resin, wherein the attachment means (5, 5a) can be mechanically moved from a first position to a second position, which can be monitored, after positioning of the slot closure arrangement (1, 1a) in the slot for the purpose of activating the spring forces of the at least one spring element (4, 4a), and wherein, on reaching the second position, the attachment means (5, 5a) can be removed from the slot closure arrangement (1, 1a) and a prestressing of the spring element (4, 4a) is released, this being understood to be activation, without the spring element being entirely relieved of stress.

2. Conductor or winding bar in a slot of an electrical machine comprising a slot closure arrangement according to Claim 1, **characterized in that** reaching of the second position of the attachment means can be identified, preferably visually.

3. Conductor or winding bar in a slot of an electrical machine comprising a slot closure arrangement according to Claim 1 or 2, **characterized in that** the attachment means (5, 5a) is arranged at the end side of the slot closure arrangement, as seen in the direction of a longitudinal axis (6).

4. Conductor or winding bar in a slot of an electrical machine comprising a slot closure arrangement according to Claim 1 or 2, **characterized in that** the attachment means (5) is arranged approximately longitudinally centrally on the slot closure arrangement, as seen in the direction of a longitudinal axis (6).

5. Conductor or winding bar in a slot of an electrical machine comprising a slot closure arrangement according to one of Claims 1 to 4, **characterized in that** the attachment means (5, 5a) comprises at least one screw (7, 7a) which can be screwed into the pressure piece (3, 3a), by means of which screw (7, 7a) the sliding block (2, 2a) can be moved in the direction of a vertical axis (11).

6. Conductor or winding bar in a slot of an electrical machine comprising a slot closure arrangement according to one of Claims 1 to 4, **characterized in that** the attachment means comprises at least one bracket-like, rivet-like, expanding mandrel-like or bayonet fitting-like holding element.

7. Conductor or winding bar in a slot of an electrical machine comprising a slot closure arrangement according to one of Claims 1 to 6, **characterized in that** the pressure piece (3, 3a), the sliding block (2, 2a) and the spring element (4, 4a) are designed such that at least one wedge/opposing-wedge combination is formed in the direction of a or of the longitudinal axis (6).

8. Conductor or winding bar in a slot of an electrical machine comprising a slot closure arrangement according to one of Claims 1 to 7, **characterized in that** the pressure piece and the at least one spring element are combined.

## Revendications

1. Conducteur ou tige d'enroulement dans une rainure d'une machine électrique avec un agencement destiné à la fermeture de rainures (1, 1a) contenant un élément de ressort en forme de ressort à lame (4, 4a) disposé entre un coulisseau (2, 2a) et une pièce de pression (3, 3a) et qui est déplacé avec au moins un moyen de fixation (5, 5a) coopérant avec le coulisseau (2, 2a) et la pièce de pression (3, 3a) dans un état précontraint activable, où il est provoqué, pour entraîner une précontrainte de l'élément de ressort plat sensiblement plan (4, 4a) dans un état non contraint, une répartition de courbure dans la direction de l'axe vertical (11) le long de l'axe transversal (12) sur la largeur de l'élément de ressort selon le principe de la poutre de flexion, où la poutre de flexion est générée dans la direction de l'axe transversal, dans lequel l'au moins un élément de ressort (4, 4a) comporte une pluralité de fibres électriquement isolantes (20) orientées de manière unidirectionnelle dans la direction de l'axe transversal (12) et qui sont assemblées l'une à l'autre par une résine résistant à la chaleur, dans lequel le moyen de fixation (5, 5a) peut être transféré mécaniquement, après un positionnement de l'agencement destiné à la fermeture de rainures (1, 1a) dans la rainure pour l'activation des forces de ressort de l'au moins un élément de ressort (4, 4a), d'une première position à une deuxième position contrôlable, et dans lequel le moyen de fixation (5, 5a), lorsqu'il atteint la deuxième position, peut être éloigné de l'agencement destiné à la fermeture de rainures (1, 1a) et une précontrainte de l'élément de ressort (4, 4a) est relâchée, ce qui doit être entendu comme une activation, sans que l'élément de ressort ne soit totalement détendu.

2. Conducteur ou tige d'enroulement dans une rainure d'une machine électrique avec un agencement destiné à la fermeture de rainures selon la revendication 1, **caractérisé par le fait que** l'atteinte de la deuxième position du moyen de fixation peut être reconnue de préférence optiquement.

3. Conducteur ou tige d'enroulement dans une rainure d'une machine électrique avec un agencement destiné à la fermeture de rainures selon la revendication 1 ou 2, **caractérisé par le fait que** le moyen de fixation (5) est disposé, vu dans la direction d'un axe longitudinal (6), du côté frontal sur l'agencement destiné à la fermeture de rainures.

4. Conducteur ou tige d'enroulement dans une rainure d'une machine électrique avec un agencement destiné à la fermeture de rainures selon la revendication 1 ou 2, **caractérisé par le fait que** le moyen de fixation (5) est disposé, vu dans la direction d'un axe longitudinal (6), environ longitudinalement au centre sur l'agencement destiné à la fermeture de rainures.

5. Conducteur ou tige d'enroulement dans une rainure d'une machine électrique avec un agencement destiné à la fermeture de rainures selon l'une des revendications 1 à 4, **caractérisé par le fait que** le moyen de fixation (5, 5a) comporte au moins une vis (7, 7a) qui peut être vissée dans la pièce de pression (3, 3a), vis (7, 7a) à l'aide de laquelle le coulisseau (2, 2a) peut être déplacé dans la direction d'un axe vertical (11).

6. Conducteur ou tige d'enroulement dans une rainure d'une machine électrique avec un agencement destiné à la fermeture de rainures selon l'une des revendications 1 à 4, **caractérisé par le fait que** le moyen de fixation comporte au moins un élément de retenue en forme d'agrafe, en forme de rivet, en forme de broche d'écartement ou en forme de fermeture par baïonnette.

7. Conducteur ou tige d'enroulement dans une rainure d'une machine électrique avec un agencement destiné à la fermeture de rainures selon l'une des revendications 1 à 6, **caractérisé par le fait que** la pièce de pression (3, 3a), le coulisseau (2, 2a) et l'élément de ressort (4, 4a) sont réalisés de sorte qu'il soit formé, dans une ou dans la direction de l'axe longitudinal (6), au moins une combinaison de cale et cale antagoniste.

8. Conducteur ou tige d'enroulement dans une rainure d'une machine électrique avec un agencement destiné à la fermeture de rainures selon l'une des revendications 1 à 7, **caractérisé par le fait que** la pièce de pression et l'au moins un élément de ressort sont unis.
